# EUROPÄISCHE PATENTSCHRIFT

(11) **EP 4 075 107 B1**
(45) Veröffentlichungstag und Bekanntmachung des Hinweises auf die Patenterteilung: **16.10.2024**
(21) Anmeldenummer: 22167995.4
(22) Anmeldetag: 12.04.2022
(51) Int. Cl.: G01F 23/284

(54) **RADARMESSGERÄT ZUR DETEKTION EINES HOHLRAUMS**
RADAR MEASURING DEVICE FOR DETECTING A CAVITY
APPAREIL DE MESURE RADAR DESTINÉ À LA DÉTECTION D'UNE CAVITÉ

(30) Priorität: 13.04.2021 DE 102021109219
(43) Veröffentlichungstag der Anmeldung: 19.10.2022
(73) Patentinhaber: VEGA Grieshaber KG, 77709 Wolfach (DE)
(72) Erfinder: Robert, Laun, 77756 Hausach (DE)
(74) Vertreter: Maiwald GmbH

(56) Entgegenhaltungen:
- EP-A1- 3 264 078
- CN-A- 102 107 108
- CN-A- 110 595 418
- DE-A1- 10 106 176
- US-A1- 2011 272 866
- US-A1- 2016 169 839

## Beschreibung

### Gebiet der Erfindung

Die Erfindung betrifft im Allgemeinen das Gebiet der Füllstandmessung. Insbesondere betrifft die Erfindung ein Radarmessgerät zum Erkennen eines Hohlraums unterhalb eines schwer fließenden Schüttguts, die Verwendung eines solchen Radarmessgeräts, ein Verfahren zum Erkennen eines Hohlraums unterhalb eines schwer fließenden Schüttguts, ein Programmelement sowie ein computerlesbares Medium.

### Hintergrund

Sensoren zur Durchführung von Messungen, insbesondere Füllstandmessungen, werden in vielen verschiedenen Gebieten der Industrie verwendet. Insbesondere bei den schwer fließenden Schüttgütern kann es beim Entnehmen aus Behältern wie Silos zur Brückenbildung und zum Generieren der Hohlräume kommen. Daraus kann folgen, dass der Füllstand mittels solcher Sensoren falsch gemessen wird. Darüber hinaus können solche Sensoren vielen und unterschiedlichen Außeneinflüssen ausgesetzt sein. Unter anderem kann es im Bereich der Füllstandmessung vorkommen, dass der entsprechende Behälter oder das offene Gewässer, von dem der Füllstand gemessen werden soll, nicht vor Außeneinflüssen geschützt ist. Es kommt nicht selten vor, dass ein Behälter zu einer Außenmessanlage gehört. Solche Behälter oder aber auch offene Gewässer können starken Temperaturschwankungen im Laufe eines Jahres ausgesetzt sein.

EP 3 264 078 A1 betrifft das Gebiet der Bestimmung von Fluideigenschaften und insbesondere die Bestimmung von Eigenschaften eines mehrphasigen Fluids, einer Grenzflächenphase eines mehrphasigen Fluids, wie z. B. einer Emulsionsphase eines mehrphasigen Fluids, und die Verwendung dieser bestimmten Eigenschaften für Bohrlochtests und die Planung und den Betrieb von Produktionsbohrungen.

US 2011/0272865 A1 betrifft die Messung des Füllstands von Material in einem metallurgischen Ofen und ein entsprechendes Ofenkontrollsystem.

DE 101 06 176 A1 betrifft ein Radarmessgerät zum Bestimmung eines Füllstands oder eines Volumens eines Schüttguts, das in einem Behälter gelagert ist, mit einer Radarschaltung im oberen Bereich des Behälters; eine Radarschaltung zum Senden eines Radarsignals in Richtung der Oberseite des Schüttguts, und zum Empfangen eines reflektierten Radarsignals von der Oberseite des Schüttguts; eine Steuereinrichtung, eingerichtet zum Ermitteln eines Echos im reflektierten Radarsignal und zum Messen des Füllstands oder des Volumens des Schüttguts, basierend auf dem Echos im reflektierten Radarsignal.

### Zusammenfassung der Erfindung

Mit Ausführungsformen der vorliegenden Offenbarung kann in vorteilhafter Weise ein verbessertes Radarmessgerät, welches auch für schwer fließende Schüttgüter oder bei sehr niedrigen Temperaturen zuverlässige Messungen eines zu überwachenden Mediums liefert, bereitgestellt werden.

Dies wird insbesondere durch die Merkmale der unabhängigen Patentansprüche ermöglicht.

Weiterbildungen ergeben sich aus den Unteransprüchen und der folgenden Beschreibung.

Ein erster Aspekt der vorliegenden Offenbarung betrifft ein Radarmessgerät, eingerichtet zum Erkennen eines Hohlraums unterhalb eines schwer fließenden Schüttguts.

Das Radarmessgerät weist eine Radarschaltung, eingerichtet zum Senden eines Radarsignals in Richtung einer Oberfläche eines Mediums und zum Empfangen eines reflektierten Radarsignals, auf. Zudem weist das Radarmessgerät eine Steuereinrichtung, eingerichtet zum Ermitteln eines oder mehrerer Echos im reflektierten Radarsignal, auf. Die Steuereinrichtung ist ferner zum Erkennen des Vorhandenseins oder Nichtvorhandenseins einer Schicht im oder oberhalb des Füllguts oder eines Hohlraums unterhalb des Füllguts, basierend auf dem oder den ermittelten Echos, eingerichtet.

Bei der Schicht kann es sich um eine Eisschicht, um eine Schlacke-Schicht, um eine festgewordene Schicht, die sich aus der sich darunter befindenden Flüssigkeit gebildet hat, oder um eine Schicht von einem ausgehärteten Material handeln.

Bei der Radarschaltung kann es sich im Allgemeinen um einen Radarsensor, wie etwa ein FMCW-Radar, handeln, welcher ein Radarsignal senden und empfangen kann. Die Radarschaltung kann beispielsweise eine Sende- und Empfangsantenne, wie etwa eine Hornantenne oder eine Stabantenne, aufweisen oder mit einer Hornantenne oder einer Stabantenne oder dergleichen verbunden sein.

Der Begriff Steuereinrichtung ist im Kontext der vorliegenden Offenbarung breit zu verstehen. Es kann sich dabei um eine Steuereinheit, Auswerteeinheit, ein Steuersystem oder dergleichen handeln. Die Steuereinrichtung kann dazu eingerichtet sein das reflektierte Radarsignal zu analysieren, auszuwerten und/oder zu interpretieren. Dabei kann die Steuereinrichtung das Vorhandensein oder das Nichtvorhandensein eines oder mehrerer Echos erkennen und/oder ermitteln. Die Steuereinrichtung kann ferner eine Intensität, eine Breite und/oder eine Diffusität eines Echos ermitteln oder auswerten. Basierend auf dem oder den ermittelten Echos kann die Steuereinrichtung erkennen, ob eine Schicht, etwa über dem Medium eines Behälters oder eines offenen Gerinnes, vorhanden ist oder nicht. Insbesondere für ein schwer fließendes Schüttgut kann die Steuereinrichtung erkennen, basierend auf dem oder den ermittelten Echos, ob im oder oberhalb eines Hohlraums oder unterhalb des Füllguts eine Schicht vorhanden ist oder nicht.

Bei dem Medium kann es sich um jegliche Art von Flüssigkeiten oder schwer fließende Schüttgüter handeln. Es sei angemerkt, dass das Vorhandensein einer Schicht im oder oberhalb des Füllguts oder eines Hohlraums unterhalb des Füllguts von vielen Faktoren oder Parametern abhängen kann. Daher kann es sich als komplex erweisen, das Vorhandensein oder Nichtvorhandensein einer Schicht im oder oberhalb des Füllguts oder eines Hohlraums unterhalb des Füllguts zu erkennen. Mit dem vorgeschlagenen Radarmessgerät kann beispielsweise auf zuverlässige und einfache Weise und/oder ohne irgendwelche Umgebungsparameter, wie etwa, ob die Flüssigkeit stillsteht oder in Bewegung ist, das Vorhandensein oder das Nichtvorhandensein beispielsweise einer Eisschicht erkannt werden. Weiterhin könnte mit dem vorgeschlagenen Radarmessgerät in einem Silo, das mehrere Meter Höhe erfasst, ein Hohlraum eines halben Meters detektiert werden und eine Zwischenschicht eines Füllguts von mehreren Metern gemessen werden. Dies ist insbesondere vorteilhaft in dem Fall der schwer fließenden Schüttgüter, die zu Brücken- und Hohlraumbildungen neigen. Mittels dieses Radarmessgeräts könnte das Korrigieren oder das Validieren einer Radar-Füllstandmessung ausgeführt werden. Weiterhin kann das Radarmessgerät ein Signal ermitteln um eine Vorrichtung zum Beseitigen des Hohlraums zu aktivieren. Bei der Beseitigungsvorrichtung könnte es sich um eine Belüftungs- oder eine Rüttelvorrichtung handeln.

Erfindungsgemäß weist das Radarmessgerät eine weitere Radarschaltung auf, welche eingerichtet ist zum Senden eines Radarsignals in Richtung einer weiteren Oberfläche des Mediums und zum Empfangen eines weiteren reflektierten Radarsignals. Die Steuereinrichtung ist eingerichtet zum Ermitteln eines oder mehrerer Echos im weiteren reflektierten Radarsignal.

Erfindungsgemäß weist das Radarmessgerät zwei Radarschaltungen auf. Die erste Radarschaltung ist eingerichtet zum Senden eines ersten Radarsignals in Richtung der Oberfläche der Schicht, insbesondere der Oberseite der Schicht, und zum Empfangen eines reflektierten ersten Radarsignals von der Oberfläche der Schicht.

Die zweite Radarschaltung ist eingerichtet zum Senden eines zweiten Radarsignals in Richtung der weiteren Oberfläche der Schicht, insbesondere der Unterseite der Schicht, und zum Empfangen eines reflektierten zweiten Radarsignals von der weiteren Oberfläche der Schicht.

Vorteilhafterweise könnte das Radarmessgerät in den Auslauf des Behälters so montiert werden, dass die Antenne der zweiten Radarschaltung entlang des Silos nach oben strahlt. Im gefüllten Zustand ohne Hohlraum ist die zweite Radarschaltung vollständig bedeckt und das zweite reflektierte Radarsignal ist nicht vorhanden, sodass kein Hohlraum detektiert wird. Bildet sich nun ein Hohlraum, bildet sich auch ein zweites reflektiertes Radarsignal. Die Steuereinrichtung kann zu jedem reflektierten Radarsignal ein Echo ermitteln und damit die Dicke der Schicht des Schüttgutes zwischen Oberseite und Unterseite der Schicht messen.

In dieser Ausführungsform kann das Radarmessgerät die Distanz zur Hohlraumdecke messen.

Gemäß einer weiteren Ausführungsform ist die Steuereinrichtung ferner dazu eingerichtet, ein erstes Schicht-Echo, welches von der Oberseite der Schicht stammt, und ein zweites Schicht-Echo, welches von der Unterseite der Schicht stammt, zu ermitteln. Mit anderen Worten kann beispielsweise im reflektierten Radarsignal ein Eingangs-Echo der Eisschicht und ein Ausgangs-Echo der Eisschicht ermittelt oder erkannt werden. Wenn die Eisschicht mit dem Medium in Berührung ist, kann das Ausgangs-Echo mit einem Füllstandecho korrespondieren, wobei das Füllstandecho ein Echo sein kann, welches mit einem Füllstand des Mediums korreliert oder woraus der Füllstand des Mediums abgeleitet oder ermittelt werden kann.

Gemäß einer weiteren Ausführungsform ist die Steuereinrichtung ferner dazu eingerichtet, ein erstes Schicht-Echo, welches von der Oberseite der Schicht stammt, im reflektierten Signal der ersten Radarschaltung zu ermitteln; und ein zweites Schicht-Echo, welches von der Unterseite der Schicht stammt, im reflektierten Signal der zweiten Radarschaltung zu ermitteln.

Gemäß einer Ausführungsform ist die Steuereinrichtung zum Ermitteln der Dicke der Schicht, insbesondere einer Eisschicht, basierend auf dem oder den ermittelten Echos, eingerichtet. Die Dicke der Eisschicht ist im Kontext der vorliegenden Offenbarung breit zu verstehen. Es kann sich dabei zum Beispiel um eine Durchschnittsdicke der gesamten Eisschicht handeln. Die Dicke der Eisschicht kann zum Beispiel, basierend auf der Entfernung oder dem Abstand zwischen zwei ermittelten Echos, wie etwa das erste und das zweite Eisschicht-Echo oder ein Eisschicht-Echo und ein Füllstandecho, ermittelt und/oder berechnet werden.

Gemäß einer Ausführungsform ist die Steuereinrichtung ferner zum Ermitteln einer Trennschärfe des einen oder der mehreren Echos eingerichtet. Der Begriff "Trennschärfe" ist im Kontext der vorliegenden Offenbarung breit zu verstehen. Dabei kann der Abstand zwischen zwei ermittelten Echos, insbesondere zwischen den jeweiligen Maxima der Echos, verstanden werden. Die Trennschärfe kann zum Beispiel von der Auflösung des Radarsignals abhängen. Daher kann der Begriff "Trennschärfe" im weitesten Sinn mit dem Begriff "Auflösung" im Zusammenhang stehen. Es kann sich als vorteilhaft erweisen, eine bestimmte Auflösung beim Radarsignal aufzuweisen, um eine relativ dünne Schicht, insbesondere eine Eisschicht, erkennen zu können.

Gemäß einer Ausführungsform ist die Steuereinrichtung eingerichtet zum Bestimmen eines Füllstands eines Mediums unterhalb der Schicht, insbesondere einer Eisschicht, das sich in einem Behälter oder in einem offenen Gerinne befindet. Das Bestimmen des Füllstands kann dabei auf einem oder mehreren der ermittelten Echos basieren. Dies kann sich zum Beispiel beim Erkennen einer Schicht als vorteilhaft erweisen, da das Radarmessgerät weiterhin den aktuellen Füllstand ermitteln kann.

Gemäß einer Ausführungsform ist die Steuereinrichtung zum Ermitteln eines freien Volumens, insbesondere eines Hohlraums unterhalb der Schicht, insbesondere einer Eisschicht, insbesondere in einem Behälter eingerichtet. Das freie Volumen kann auch als Luftpolster oder ein Hohlraum bezeichnet werden. Das Vorhandensein eines Luftpolsters zwischen einer Eisschicht und dem Medium kann zum Beispiel beim Entleeren des Behälters vorkommen. Dabei kann die Eisschicht am Rand des Behälters hängen bleiben. Dadurch kann beispielsweise erkannt werden, wieviel Behältervolumen bis zur Eisschicht frei ist und wieviel ungefrorenes Behältervolumen aus dem Behälter entnommen werden kann. Das Vorhandensein eines Hohlraums kann beispielsweise innerhalb eines mehrere Meter langen Silos beim Entleeren eins schwer fließenden Schüttgutes aus dem Silo vorkommen. Dadurch kann beispielsweise erkannt werden, wieviel Behältervolumen oberhalb des Hohlraums zur Verfügung steht.

Gemäß einer Ausführungsform ist die Steuereinrichtung zum Absetzen einer Warnmeldung eingerichtet, wenn eine Schicht, insbesondere eine Eisschicht oder ein Hohlraum, erstmalig erkannt wird. Eine solche Warnmeldung kann beispielsweise über eine Schnittstelle abgesetzt werden. Dies kann zum Beispiel das Heizen des Mediums mit einer entsprechenden Einrichtung auslösen und/oder aber auch einen Benutzer informieren. Denkbar ist ebenso, dass eine weitere Meldung abgesetzt werden kann, sobald eine vormals erkannte Schicht, insbesondere Eisschicht, nicht mehr vorhanden ist oder beispielsweise geschmolzen ist. Eine weitere Meldung könnte abgesetzt werden, wenn der detektierte Hohlraum nicht mehr vorhanden ist, beispielsweise aufgrund eines Nachrutschens des Schüttgutes infolge einer Vibration oder eines Rütteln eines Silos.

Gemäß einer Ausführungsform ist die Schicht eine Eisschicht. Die Steuereinrichtung ist eingerichtet zum Absetzen einer Warnmeldung, wenn eine Grenzeisschichtdicke der Eisschicht überschritten oder unterschritten wird. Beispielsweise kann im Radarmessgerät, wie etwa in einem Speicher, die Grenzeisschichtdicke hinterlegt sein. Es können auch zum Beispiel mehrere Grenzeisschichtdicken zum Auslösen einer Warnmeldung führen. Dabei ist es denkbar, dass die Warnmeldung bzw. der Inhalt der Warnmeldung von der Grenzeisschichtdicke, welche überschritten oder unterschritten worden ist, abhängt.

Gemäß einer Ausführungsform weist das Radarmessgerät ferner einen Temperatursensor auf, welcher dazu eingerichtet ist, eine Temperatur im Behälter oder eine Außentemperatur zu messen. Zusätzlich basiert das Erkennen des Vorhandenseins oder Nichtvorhandenseins der Eisschicht mittels der Steuereinrichtung ferner auf der gemessenen Temperatur. Der Temperatursensor kann beispielsweise auch die Umgebungstemperatur messen.

Es ist denkbar, dass der Temperatursensor durchgehend die Temperatur im Behälter und/oder in der Umgebung des Radarmessgeräts erfasst oder überwacht, sodass, sobald die gemessene Temperatur einen Grenzwert unterschreitet, das Radarmessgerät angeleitet werden kann das Vorhandensein oder Nichtvorhandensein einer Eisschicht mittels der Steuereinrichtung zu erkennen. Der Grenzwert kann beispielsweise in einem Speicher des Radarmessgeräts oder in einer Cloud oder einem Server gespeichert sein. Es können auch mehrere Grenzwerte hinterlegt oder relevant sein, welche vom Medium abhängen.

Gemäß einer Ausführungsform ist das Radarmessgerät innerhalb des Behälters angeordnet oder sendet das Radarsignal durch eine optisch durchsichtige Wand des Behälters. Alternativ oder zusätzlich verfügt das Radarmessgerät ferner über einen Albedosensor zum Messen der Albedo der Oberfläche des Mediums im Behälter oder in einem offenen Gerinne. Zusätzlich basiert das Erkennen des Vorhandenseins oder Nichtvorhandenseins einer Eisschicht mittels der Steuereinrichtung ferner auf der gemessenen Albedo.

Gemäß einer weiteren Ausführungsform ist die Steuereinrichtung zur Korrektur des gemessenen Füllstands oder des gemessenen Volumens des Mediums unter Berücksichtigung des Hohlraums unterhalb des Mediums eingerichtet.

Gemäß einer weiteren Ausführungsform ist die Steuereinrichtung zur Aktivierung einer Vorrichtung eingerichtet, wenn der Hohlraum eine Mindestgröße überschritten hat. Die Vorrichtung ist zum Rütteln des Mediums und/oder zum Belüften des Hohlraums eingerichtet.

Ein weiterer Aspekt der vorliegenden Offenbarung betrifft die Verwendung eines Radarmessgeräts, so wie voranstehend und nachfolgend beschrieben, zum Erkennen des Vorhandenseins oder Nichtvorhandenseins einer Schicht im oder oberhalb des Füllguts oder eines Hohlraums unterhalb des Füllguts. Zusätzlich kann das Radarmessgerät beispielsweise zum Messen eines Füllstands und/oder eines Grenzstands verwendet werden. Weiterhin kann das Radarmessgerät beispielsweise zur Korrektur des gemessenen Füllstands oder des gemessenen Volumens des Mediums unter Berücksichtigung des Hohlraums unterhalb des Mediums verwendet werden. Es kann auch vorgesehen sein, dass das Radarmessgerät zur Aktivierung einer Vorrichtung, die zum Rütteln des Mediums und/oder zum Belüften des Hohlraums eingerichtet ist, eingerichtet ist.

Ein weiterer Aspekt der vorliegenden Offenbarung betrifft ein Verfahren zum Erkennen einer Schicht im oder oberhalb des Füllguts oder eines Hohlraums unterhalb des Füllguts, insbesondere einer Eisschicht. Das Verfahren weist folgende Schritte auf:
- Senden eines Radarsignals in Richtung einer Oberfläche eines Mediums;
- Empfangen eines reflektierten Radarsignals;
- Ermitteln eines oder mehrerer Echos im reflektierten Radarsignal; und
- Erkennen des Vorhandenseins oder Nichtvorhandenseins einer Schicht im Medium und/oder eines Hohlraums unterhalb des Mediums, basierend auf dem oder den ermittelten Echos.

Durch ein solches Verfahren der Schichtdetektion, insbesondere einer Eisschichtdetektion, kann beispielsweise ferner auf offenen Gewässern die aktuelle Eisschichtdicke berührungslos ermittelt werden.

Ein weiterer Aspekt der vorliegenden Offenbarung betrifft ein Programmelement, welches, wenn es auf einer Steuereinrichtung eines Radarmessgeräts ausgeführt wird, das Radarmessgerät anleitet, die folgenden Schritte durchzuführen:
- Senden eines Radarsignals in Richtung einer Oberfläche eines Mediums;
- Empfangen eines reflektierten Radarsignals;
- Ermitteln eines oder mehrerer Echos im reflektierten Radarsignal; und
- Erkennen des Vorhandenseins oder Nichtvorhandenseins einer Schicht im Medium und/oder eines Hohlraums unterhalb des Mediums, basierend auf dem oder den ermittelten Echos.

Ein weiterer Aspekt der vorliegenden Offenbarung betrifft ein computerlesbares Medium, auf dem ein Programmelement, so wie voranstehend beschrieben, gespeichert ist.

Im Folgenden werden mit Verweis auf die Figuren Ausführungsformen der vorliegenden Offenbarung beschrieben. Werden in der folgenden Figurenbeschreibung die gleichen Bezugszeichen verwendet, so bezeichnen diese gleichen oder ähnlichen Elemente. Die Darstellungen in den Figuren sind schematisch und nicht maßstäblich.

### Kurze Beschreibung der Figuren

Fig. 1 zeigt ein Radarmessgerät, das nicht gemäß der beanspruchten Erfindung ist.
Fig. 2a und 2b zeigen die Verwendung eines Radarmessgeräts, das nicht gemäß der beanspruchten Erfindung ist.
Fig. 3a und 3b zeigen die Verwendung eines Radarmessgeräts, das nicht gemäß der beanspruchten Erfindung ist.
Fig. 4a und 4b zeigen die Verwendung eines Radarmessgerät, das nicht gemäß der beanspruchten Erfindung ist.
Fig. 5 zeigt ein Radarmessgerät, das nicht gemäß der beanspruchten Erfindung ist.
Fig. 6 zeigt ein Flussdiagramm eines Verfahrens, das nicht gemäß der beanspruchten Erfindung ist.
Fig. 7 zeigt ein Radarmessgerät gemäß einer Ausführungsform der Erfindung.

### Detaillierte Beschreibung von Ausführungsformen

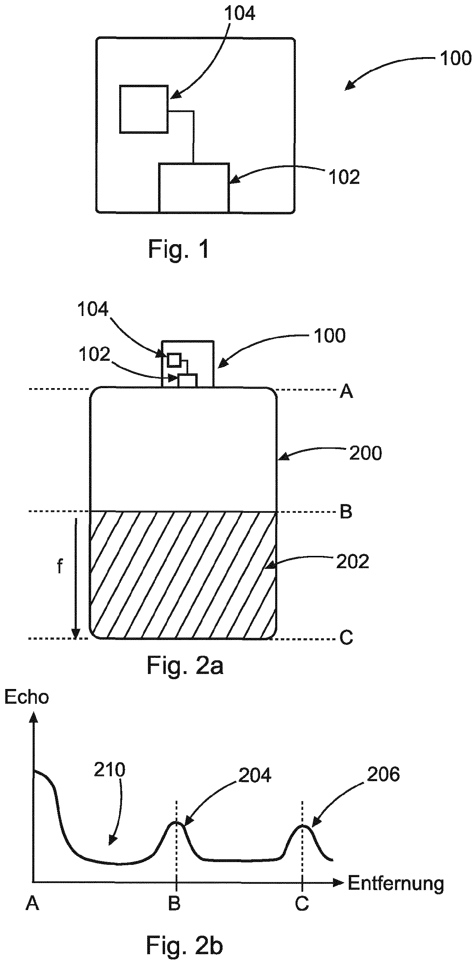

Figur 1 zeigt ein Radarmessgerät 100, das nicht gemäß der beanspruchten Erfindung ist.

Das Radarmessgerät 100 weist eine Radarschaltung 102 und eine Steuereinrichtung 104 auf. Die Radarschaltung 102 ist dazu eingerichtet ein Radarsignal in Richtung einer Oberfläche eines Mediums 202 zu senden und das daraus entstandene reflektierte Radarsignal 210 zu empfangen. Die Steuereinrichtung 104 ist dazu eingerichtet oder etwa dazu programmiert, eines oder mehrere Echos 204, 206, 208, 208' im reflektierten Radarsignal 210 zu ermitteln. Die Steuereinrichtung 104 kann dabei zum Beispiel die Anzahl der Echos, die Stärke der Echos, die Schärfe der Echos ermitteln. Die Schärfe der Echos kann sich beispielsweise auf die Breite des Echos beziehen. Sowohl eine Stärke als auch eine Schärfe eines Echos ist im Kontext der vorliegenden Offenbarung breit zu verstehen.

Das Radarmessgerät 100 kann sowohl in einem Behälter als auch über einem offenen Gewässer angeordnet sein. Dabei kann das Radarmessgerät 100 beispielsweise in einem Behälter 200, an einem Behälter 200 oder an einer Brücke oder einem Kran angeordnet oder befestigt sein.

Es sei angemerkt, dass die Steuereinrichtung 104 zusätzlich dazu eingerichtet sein kann, einen Füllstand des Mediums 202 zu erfassen. Insbesondere kann die Steuereinrichtung 104 ferner dazu eingerichtet sein, einen Füllstand, basierend auf den erfassten Echos 204, 206, 208, 208`, zu ermitteln.

Figur 2a und 2b zeigen eine Verwendung eines Radarmessgeräts 100, das nicht gemäß der beanspruchten Erfindung ist.

Sofern nicht anders beschrieben, weist das Radarmessgerät 100 der Figur 2a dieselben Merkmale und Elemente auf wie das Radarmessgerät 100 der Figur 1. Figur 2a zeigt die Verwendung des Radarmessgeräts 100 an einem Behälter 200, welcher mit einem Medium 202 zum Teil gefüllt ist. Der Behälter 200 ist beispielsweise bis zur Höhe B ausgehend vom Boden C des Behälters gefüllt. Der Füllstand f des Behälters 200 kann mittels dem Radarmessgerät 100 erfasst werden.

Das Radarmessgerät 100 der Figur 2a und insbesondere dessen Steuereinrichtung 104 kann dazu eingerichtet sein, in diesem Beispielsfall das Nichtvorhandensein einer Schicht, beispielsweise einer Eisschicht 300, zu erkennen. Ein Radarsignal in Richtung Oberfläche des Mediums 202 wird mit der Radarschaltung 102 gesendet. Das Radarsignal kann an der Oberfläche des Mediums reflektieren und wieder von der Radarschaltung 102 empfangen werden.

In Figur 2b wird ein beispielhaftes reflektiertes Radarsignal 210 anhand eines Diagramms dargestellt. Die horizontale Achse des Diagramms zeigt die Entfernung zum Radarmessgerät 100 in einer beliebigen Einheit. Die Entfernung kann beispielsweise in mm, oder in cm angegeben werden. Die sogenannte Null-Entfernung befindet sich bei Höhe A.

Die vertikale Achse zeigt ein Echoparameter, etwa als Echo bezeichnet, in einer beliebigen Einheit. Das Echo kann beispielsweise in dB angegeben werden. Im Diagramm der Figur 2b sind insbesondere zwei Echos 204, 206 erkennbar. Das erste Echo 204 kann an einer Entfernung B vom Radarmessgerät 100 erkennbar sein. Das zweite Echo 206 kann an einer Entfernung C vom Radarmessgerät 100 erkennbar sein. Anhand des ersten Echos 204 und des zweiten Echos 206 kann die Steuereinrichtung 104 ermitteln, dass im Behälter der Figur 2a - korrespondierend zum Diagramm der Figur 2b - keine Schicht, beispielsweise keine Eisschicht, vorhanden ist. Somit wird erkannt, dass das reflektierte Radarsignal 210 lediglich ein einziges Echo in der Nähe der Höhe B aufweist. Dieses Echo 204 kann als Füllstandecho bezeichnet sein, da daraus der Füllstand ermittelt werden kann. Zudem ist das zweite Echo 206 relativ entfernt vom Füllstandecho 204 und es ist bei einer Höhe C zu erkennen, welche der Tiefe des Behälters 200 bzw. der Entfernung des Behälterbodens entspricht, wenn die Dielektizitätskonstante der Füllgut berücksichtigt ist. Das zweite Echo 206 kann darum ebenso als Bodenecho 206 bezeichnet werden. Aus der Distanz oder Entfernung zwischen dem Füllstandecho 204 und dem Bodenecho 206 kann der Füllstand f mittels der Steuereinrichtung 104 ermittelt werden.

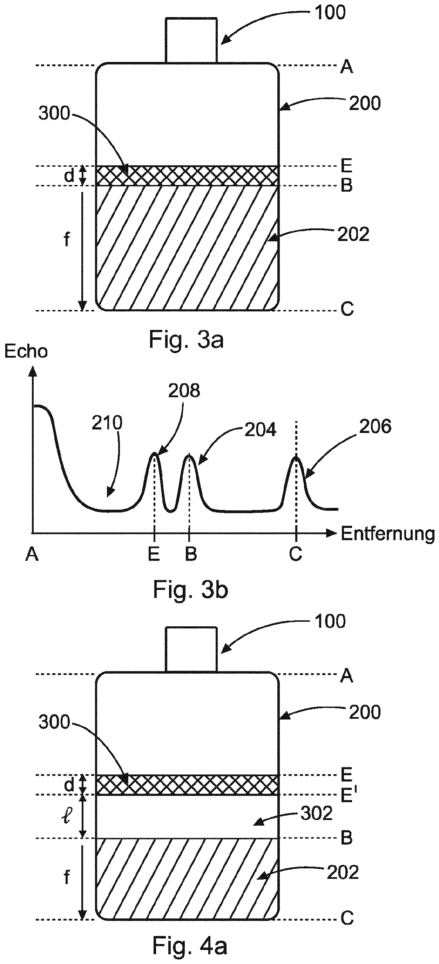

Figur 3a und 3b zeigen die Verwendung eines Radarmessgeräts 100, das nicht gemäß der beanspruchten Erfindung ist.

Sofern nicht anders beschrieben, weist das Füllstandmesssystem 100 der Figur 3a dieselben Merkmale und Elemente auf wie das Füllstandmesssystem der Figuren 1 und 2a. Im Beispiel der Figur 3a ist eine Schicht, beispielsweise eine Eisschicht 300, oberhalb des Mediums 202 im Behälter 200 zu erkennen. Die Eisschicht 300 weist eine Eisschichtdicke d auf. Das sich darunter befindende Medium 202 weist einen Füllstand f auf. Das Radarsignal wird von der Radarschaltung 102 des Radarmessgeräts 100 in Richtung Oberfläche des Mediums 202 gesendet und nach Reflexion wieder von der Radarschaltung 102 empfangen.

Das entsprechend reflektierte Radarsignal 210 ist im Diagramm der Figur 3b gezeigt. Das Diagramm der Figur 3b weist die gleiche Achse wie die der Figur 2b auf. Das reflektierte Radarsignal 210 weist drei Echos 204, 206 und 208 auf. Das Echo 206 bei Entfernung oder Höhe C ist das Bodenecho. Es ist erkennbar, dass zwei Echos 204, 208 relativ nah aneinander sind. Bei einer kontinuierlichen berührungslosen Füllstandmessung kann zum Beispiel der Beginn der Eisbildung dadurch erkannt werden, dass am reflektierten Radarsignal das ursprüngliche Füllstandecho 204 sich in zwei einzelne Echos 208, 204 aufteilt. Diese zwei Echos befinden sich zwischen der Sensorebene A und der Bodenentfernung C. Basierend auf dem Erkennen der zwei unmittelbar benachbarten Echos 204, 208 kann die Steuereinrichtung 104 des Radarmessgeräts 100 das Vorhandensein der Eisschicht 300 ermitteln. Zusätzlich zum Füllstandecho 204 befindet sich in seiner relativ engen Nähe ein zweites Echo 208, welches als Eisschicht-Echo 208 bezeichnet werden kann.

Zusätzlich kann aus der Distanz zwischen dem Eisschicht-Echo 208 und dem Füllstandecho 204 eine Eisschichtdicke d mittels der Steuereinrichtung 104 ermittelt werden.

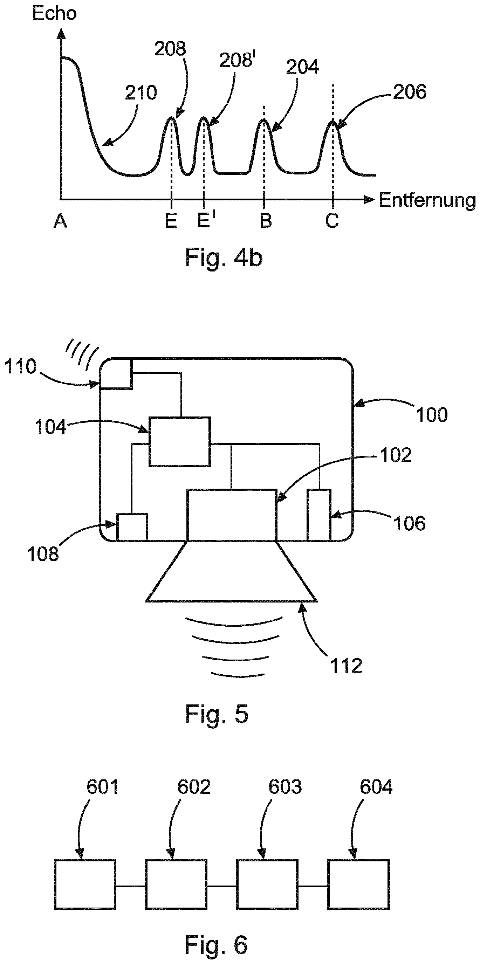

Figur 4a und 4b zeigen die Verwendung eines Radarmessgeräts 100, das nicht gemäß der beanspruchten Erfindung ist.

Sofern nicht anders beschrieben, weist das Füllstandmesssystem 100 der Figur 3a dieselben Merkmale und Elemente auf wie das Füllstandmesssystem der Figuren 1, 2a und 3a. Im Beispiel der Figur 4a ist eine Schicht, beispielsweise eine Eisschicht 300, oberhalb des Mediums 202 im Behälter 200 zu erkennen. Ebenso in Figur 4a erkennbar ist ein freies Volumen 302, welches sich zwischen der Schicht, beispielsweise der Eisschicht 300, und des Mediums 202 befindet. Dies kann zum Beispiel vorkommen, wenn die Schicht, beispielsweise die Eisschicht 300, eine bestimmte Schichtdicke d erreicht hat und an den Wänden des Behälters 200 festhält, während der Behälter jedoch teilweise entleert wird.

Das von der Radarschaltung 102 des Radarmessgeräts 100 der Figur 4a empfangene reflektierte Radarsignal 210 ist in Figur 4b gezeigt. Das Diagramm der Figur 3b weist die gleiche Achse wie die der Figuren 2b und 3b auf. Das reflektierte Signal 210 weist vier Echos 204, 206, 208, 208` auf. Es befinden sich somit zwischen der Radarmessgeräthöhe A und der Bodenentfernung C drei Echos 204, 208, 208`. Die Steuereinrichtung 104 kann daraus das Vorhandensein einer Schicht 300, beispielsweise einer Eisschicht 300, und eines freien Volumens 302 ermitteln. Um eine Entfernung E sind in Figur 4b zwei unmittelbar benachbarte Schicht-Echos 208, 208` erkennbar. Die Steuereinrichtung 104 ist dazu eingerichtet das erste Schicht-Echo 208, welches von der Oberseite der Schicht 300, beispielsweise der Eisschicht 300, stammt, und das zweite Schicht-Echo 208`, welches von der Unterseite der Schicht 300, beispielsweise der Eisschicht 300, stammt, zu ermitteln. Aus der Distanz oder Entfernung zwischen dem ersten Schicht-Echo 208 und dem zweiten Schicht-Echo 208` kann die Schichtdicke, beispielsweise die Eisschichtdicke d, ermittelt werden.

Figur 5 zeigt ein Radarmessgerät 100, das nicht gemäß der beanspruchten Erfindung ist.

Sofern nicht anders beschrieben, weist das Radarmessgerät 100 der Figur 5 dieselben Merkmale und Elemente auf wie das Radarmessgerät der Figuren 1, 2a, 3a und 4a.

Zusätzlich weist das Radarmessgerät 100 der Figur 5 einen Temperatursensor 106 auf, welcher dazu eingerichtet sein kann, die Temperatur im Behälter zu erfassen. Alternativ oder zusätzlich ist es denkbar, dass der Temperatursensor 106 des Radarmessgeräts 100 der Figur 5 die Umgebungstemperatur misst. Dies kann sich zum Beispiel als vorteilhaft erweisen, wenn das Radarmessgerät 100 etwa nicht an oder in einem Behälter 200 angeordnet ist, sondern über einem freien Gewässer. Das Erkennen des Vorhandenseins oder Nichtvorhandenseins einer Eisschicht 300 kann somit zusätzlich auf der gemessenen oder erfassten Temperatur basieren. Denkbar ist zum Beispiel, dass die gemessene Temperatur zur Überprüfung einer bereits basierend auf den ermittelten Echos erkannten Eisschicht 300 verwendet werden kann. Eine solche Temperaturmessung kann beispielsweise als redundante Messung und/oder als Prüfmessung betrachtet werden.

Das Radarmessgerät 100 der Figur 5 kann zudem einen Albedosensor 108 aufweisen. Der Albedosensor 108 kann zum Messen der Albedo der Oberfläche des Mediums in einem Behälter oder in einem offenen Gerinne eingerichtet sein. Es sei angemerkt, dass Eis und Schnee eine Albedo von ca. 0.9 haben, wobei zum Beispiel Wasser eine Albedo von ca. 0.06 hat. Es kann sich zudem als vorteilhaft erweisen, dass ein solches Radarmessgerät 100 mit einem Albedosensor 108 sich innerhalb des Behälters 200 befindet, sodass der Albedosensor 108 mit möglichst wenig optischen Hindernissen konfrontiert ist. Denkbar ist aber auch, dass der Behälter 200 einen durchsichtigen Abschnitt aufweist, sodass der Albedosensor108 durch einen solchen Abschnitt die Albedo messen kann. Das Erkennen des Vorhandenseins oder Nichtvorhandenseins einer Eisschicht 300 kann somit zusätzlich auf der gemessenen Albedo basieren. Sollte beispielsweise eine Eisschicht 300 erkannt worden sein, wobei beispielsweise die Steuereinrichtung 104 eine relativ große Fehlerspanne erfasst, so kann anhand der gemessenen Albedo bestätigt oder widersprochen werden, ob die Eisschicht 300 tatsächlich vorhanden oder nicht vorhanden ist.

Das Radarmessgerät 100 der Figur 5 kann zum Beispiel ferner eine Schnittstelle 110 aufweisen, welche eine Meldung, wie etwa eine Warnmeldung, absetzen kann. Die Steuereinrichtung 104 des Radarmessgeräts 100 kann beispielsweise dazu eingerichtet sein, eine Warnmeldung abzusetzen, wie etwa über die Schnittstelle 110, wenn eine Grenzeisschichtdicke einer erkannten Eisschicht überschritten oder unterschritten wird. Die Warnmeldung kann zum Beispiel in Form eines Signals an ein übergeordnetes System gesendet oder übermittelt werden.

Figur 6 zeigt ein Flussdiagramm eines Verfahrens, das nicht gemäß der beanspruchten Erfindung ist.

Das Verfahren ist zum Erkennen einer Eisschicht eingerichtet und entsprechend programmiert. In einem ersten Schritt 601 wird ein Radarsignal in Richtung einer Oberfläche eines Mediums 202 gesendet. In einem weiteren Schritt 602 wird ein reflektiertes Radarsignal 210 empfangen. Das reflektierte Radarsignal 210 kann überwiegend an der Oberfläche des Mediums 220, das heißt gegebenenfalls auch an der Oberfläche einer vorhandenen Eisschicht 300, reflektiert worden sein. Im Schritt 603 wird ein Echo oder mehrere Echos 204, 206, 208, 208` im reflektierten Radarsignal ermittelt. Ein Echo kann als Bodenecho 206 ermittelt werden. Ein weiteres Echo kann als Füllstandecho 204 ermittelt werden. Ein oder zwei weitere Echos können als Eisschicht-Echo 208, 208' ermittelt werden. Zudem kann das Ermitteln eines oder mehrerer Echos mittels der Steuereinrichtung 104 erfolgen. Ferner wird im Schritt 604 das Vorhandensein oder Nichtvorhandensein einer Schicht 300 im oder oberhalb des Füllguts und/oder eines Hohlraums unterhalb des Füllguts basierend auf dem oder den ermittelten Echos 204, 206, 208, 208`, erkannt. Zusätzlich kann beispielsweise der Füllstand des Mediums 202 mittels der Steuereinrichtung 104 ermittelt werden. In einem weiteren optionalen Schritt ist es auch denkbar, dass die Schichtdicke, beispielsweise die Eisschichtdicke, anhand der ermittelten Echos, wie etwa dem oder den Schicht-Echo(s) und/oder dem Füllstandecho, ermittelt wird. Ebenso optional, kann in einem weiteren Schritt ein leeres Volumen 302 ermittelt werden. Dabei kann zum Beispiel die Höhe des freien Volumens 302 oder der Höhenunterschied zwischen der erkannten Schicht 300 und dem Medium 202 ermittelt werden.

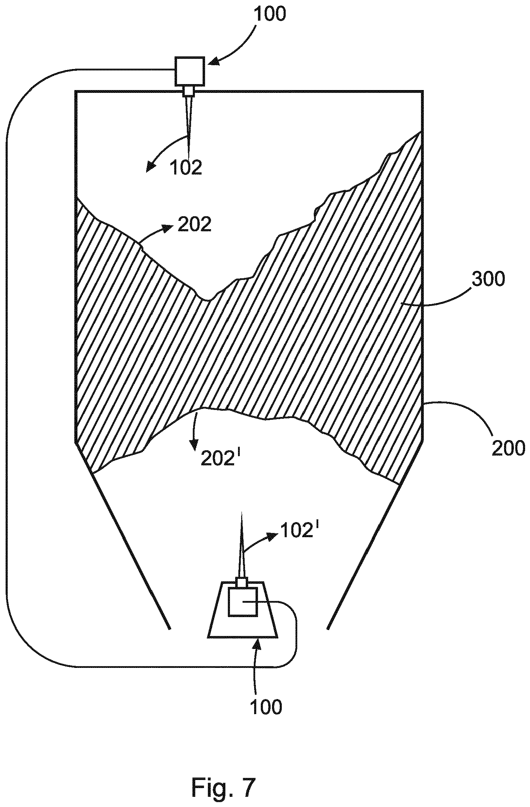

Figur 7 zeigt ein Radarmessgerät 100 gemäß einer Ausführungsform der vorliegenden Erfindung. Das Radarmessgerät 100 der Figur 7 weist zwei Radarschaltungen 102, 102' auf. Die erste Radarschaltung ist im oberen Bereich des Silos 200 positioniert. Die zweite Radarschaltung ist im unteren Bereich des Silos 200, beispielsweise in Bereich des Auslaufs des Silos 200, positioniert. Bei dem Füllgut handelt es sich um ein schwer fließendes Schüttgut 300, das im Silo 200 gelagert ist.

Die erste Radarschaltung 102 ist eingerichtet zum Senden eines ersten Radarsignals in Richtung der Oberfläche 202 der Schicht 300, insbesondere der Oberseite 202 der Schicht 300, und zum Empfangen eines reflektierten ersten Radarsignals 210 von der Oberfläche 202 der Schicht 300.

Die zweite Radarschaltung 102' ist eingerichtet zum Senden eines zweiten Radarsignals in Richtung der weiteren Oberfläche 202', 202 der Schicht 300. Insbesondere ist die zweite Radarschaltung 102' eingerichtet zum Senden des zweite Radarsignals in die Richtung der Unterseite 202' der Schicht 300, und zum Empfangen eines reflektierten zweiten Radarsignals 210' von der weiteren Oberfläche 202', 202 der Schicht 300.

Die Steuereinrichtung 104 ist ferner dazu eingerichtet ein erstes Schicht-Echo 208, welches von der Oberseite der Schicht 300 stammt, im reflektierten Signal der ersten Radarschaltung 102 zu ermitteln; und ein zweites Schicht-Echo 208`, welches von der Unterseite der Schicht 300 stammt, im reflektierten Signal der zweiten Radarschaltung 102' zu ermitteln.

Im gefüllten Zustand ist die zweite Radarschaltung 102' mit dem Füllgut bedeckt, sodass das zweite reflektierte Signal 210' nicht vorhanden ist. In diesem Fall ist es denkbar, dass das erste Schicht-Echo 208 für die Füllstandmessung verwendet wird.

In dem Fall, bei dem das zweite reflektierte Signal vorhanden ist, wird der Hohlraum unterhalb des Füllguts 300 detektiert. Das zweite Schicht-Echo 208' kann insbesondere für die Volumenmessung des Hohlraums verwendet werden.

Die Steuereinrichtung 104 setzt, falls gewünscht, einer Warnmeldung ab, wenn eine Schicht 300 oder ein Hohlraum erstmalig erkannt wurde.

Das Volumen des Hohlraums dient als Korrektur des mittels des ersten Schicht-Echos 208 gemessenen Füllstands oder des gemessenen Volumens des Mediums.

Zusätzlich kann aus der Distanz zwischen dem ersten Schicht-Echo 208 und dem zweiten Schicht-Echo 208' eine Schichtdicke mittels der Steuereinrichtung 104 ermittelt werden.

Zusätzlich ist es denkbar, dass die Steuereinrichtung 104 zur Aktivierung einer Vorrichtung 400 verwendet wird, insbesondere wenn der Hohlraum eine Mindestgröße überschritten hat.

Bei der Vorrichtung 400 handelt es sich beispielsweise um eine Rüttelvorrichtung, die das Füllgut rüttelt und demzufolge das Nachrutschen des Füllguts in den Hohlraum veranlasst. Alternativ oder zusätzlich handelt es sich bei der Vorrichtung 400 um eine Belüftungsvorrichtung, die bei entstehendem Vakuum den Hohlraum mit Luft befüllen und somit unter Umständen beseitigen kann.

Aus der Füllstandmessung mittels des ersten Schicht-Echos 208 und der Hohlraumvolumenmessung aus dem zweiten Schicht-Echo 208' wird durch die Differenz der Hohlraumdistanz oder Hohlraumgröße (kann bei Verwendung einer 3D-Messung sehr genau berechnet werden) und der Füllhöhe eine Korrektur oder wenigstens eine Validierung der Füllstandmessung durchgeführt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

## Patentansprüche

1. Radarmessgerät (100), eingerichtet zum Erkennen eines Hohlraums unterhalb des Füllguts, das in einem Behälter (200) gelagert ist, wobei das Füllgut ein schwer fließendes Schüttgut ist, aufweisend:
eine erste Radarschaltung (102', 102), eingerichtet zum Senden eines ersten Radarsignals in Richtung einer Oberfläche (202, 202') eines Mediums und zum Empfangen eines ersten, reflektierten Radarsignals (210);
eine weitere, zweite Radarschaltung (102, 102'), eingerichtet zum Senden eines zweiten Radarsignals in Richtung einer weiteren Oberfläche (202', 202) des Mediums und zum Empfangen eines zweiten, weiteren reflektierten Radarsignals (210', 210),
eine Steuereinrichtung (104), eingerichtet zum Ermitteln eines oder mehrerer Echos (204, 206, 208, 208') im reflektierten Radarsignal (210, 210') und zum Ermitteln eines oder mehrerer Echos (204, 206, 208, 208') im zweiten, weiteren reflektierten Radarsignal (210', 210);
wobei die Steuereinrichtung (104) zum Erkennen des Vorhandenseins oder Nichtvorhandenseins einer Schicht (300) im oder oberhalb des Füllguts oder eines Hohlraums unterhalb des Füllguts, basierend auf dem oder den ermittelten Echos, eingerichtet ist;
wobei die erste Radarschaltung (102) im oberen Bereich des Behälters (200) positioniert ist;
wobei die zweite Radarschaltung (102') im unteren Bereich des Behälters (200), insbesondere in Bereich des Auslaufs des Behälters (200), positioniert ist.

2. Radarmessgerät (100) nach Anspruch 1,
wobei die erste Radarschaltung (102) eingerichtet ist zum Senden des ersten Radarsignals in Richtung der Oberfläche (202, 202') der Schicht (300), insbesondere der Oberseite der Schicht, und zum Empfangen eines reflektierten ersten Radarsignals (210) von der Oberfläche der Schicht (300);
wobei die zweite Radarschaltung (102') eingerichtet ist zum Senden des zweiten Radarsignals in Richtung der weiteren Oberfläche (202', 202) der Schicht (300), insbesondere der Unterseite der Schicht, und zum Empfangen eines reflektierten zweiten Radarsignals (210') von der weiteren Oberfläche (202', 202) der Schicht (300).

3. Radarmessgerät (100) nachAnspruch 1 oder 2,
wobei die Steuereinrichtung (104) ferner dazu eingerichtet ist ein erstes Schicht-Echo (208), welches von der Oberseite der Schicht (300) stammt, und ein zweites Schicht-Echo (208`), welches von der Unterseite der Schicht (300) stammt, zu ermitteln.

4. Radarmessgerät (100) nach einem der vorhergehenden Ansprüche,
wobei die Steuereinrichtung (104) ferner dazu eingerichtet ist ein erstes Schicht-Echo (208), welches von der Oberseite der Schicht (300) stammt, im reflektierten Signal der ersten Radarschaltung (102) zu ermitteln; und ein zweites Schicht-Echo (208`), welches von der Unterseite der Schicht (300) stammt, im reflektierten Signal der zweiten Radarschaltung (102') zu ermitteln.

5. Radarmessgerät (100) nach einem der vorhergehenden Ansprüche,
wobei die Steuereinrichtung (104) zum Ermitteln eines freien Volumens (302), insbesondere eines Hohlraums, unterhalb der Schicht (300), in dem Behälter (200) eingerichtet ist.

6. Radarmessgerät (100) nach einem der vorhergehenden Ansprüche,
wobei die Steuereinrichtung (104) zum Absetzen einer Warnmeldung, wenn eine Schicht (300) oder ein Hohlraum erstmalig erkannt wird, eingerichtet ist.

7. Radarmessgerät (100) nach einem der vorhergehenden Ansprüche, wobei die Schicht eine Eisschicht ist, und wobei die Steuereinrichtung (104) zum Absetzen einer Warnmeldung, wenn eine Grenzeisschichtdicke (d) der Eisschicht (300) überschritten oder unterschritten wird, eingerichtet ist.

8. Radarmessgerät (100) nach Anspruch 7, ferner aufweisend einen Temperatursensor (106), welcher dazu eingerichtet ist eine Temperatur im Behälter (200) oder eine Außentemperatur zu messen; und
wobei das Erkennen des Vorhandenseins oder Nichtvorhandenseins der Eisschicht (300) mittels der Steuereinrichtung (104) ferner auf der gemessenen Temperatur basiert.

9. Radarmessgerät (100) nach einem der vorhergehenden Ansprüche, wobei die Steuereinrichtung (104) zur Korrektur des gemessenen Füllstands oder des gemessenen Volumens des Mediums unter Berücksichtigung des Hohlraums unterhalb des Mediums eingerichtet ist.

10. Radarmessgerät (100) nach einem der vorhergehenden Ansprüche,
wobei die Steuereinrichtung (104) zur Aktivierung einer Vorrichtung (400) eingerichtet ist, wenn der Hohlraum eine Mindestgröße überschritten hat;
wobei die Vorrichtung zum Rütteln des Mediums und/oder zum Belüften des Hohlraums eingerichtet ist.

11. Verwendung eines Radarmessgeräts (100) nach einem der Ansprüche 1 bis 10 zum Erkennen des Vorhandenseins oder Nichtvorhandenseins einer Schicht (300) im oder oberhalb des Füllguts oder eines Hohlraums unterhalb des Füllguts.

12. Verfahren zum Erkennen eines Hohlraums unterhalb des Füllguts (300), das in einem Behälter (200) gelagert ist, wobei das Füllgut ein schwer fließendes Schüttgut ist, aufweisend die Schritte:
Senden (601) eines Radarsignals in Richtung einer Oberfläche eines Mediums (202) durch eine erste Radarschaltung (102);
Empfangen (602) eines reflektierten Radarsignals;
Ermitteln (603) eines oder mehrerer Echos (204, 206, 208, 208') im reflektierten Radarsignal (210);
Senden eines zweiten Radarsignals in Richtung einer weiteren Oberfläche (202', 202) des Mediums durch eine weitere, zweite Radarschaltung (102, 102');
Empfangen eines zweiten, weiteren reflektierten Radarsignals (210', 210);
Ermitteln eines oder mehrerer Echos (204, 206, 208, 208') im zweiten, weiteren reflektierten Radarsignal (210', 210); und
Erkennen (604) des Vorhandenseins oder Nichtvorhandenseins einer Schicht (300) im oder oberhalb des Füllguts oder eines Hohlraums unterhalb des Füllguts, basierend auf dem oder den ermittelten Echos;
wobei die erste Radarschaltung (102) im oberen Bereich des Behälters (200) positioniert ist;
wobei die zweite Radarschaltung (102, 102') im unteren Bereich des Behälters (200), insbesondere in Bereich des Auslaufs des Behälters (200), positioniert ist.

13. Programmelement, welches, wenn es auf einer Steuereinrichtung (104) eines Radarmessgeräts (100) ausgeführt wird, das Radarmessgerät (100) anleitet, die Schritte gemäß Anspruch 12 durchzuführen.

14. Computerlesbares Medium, auf dem ein Programmelement nach Anspruch 13 gespeichert ist.

## Claims

1. Radar measuring device (100), configured to detect a cavity below the filling material stored in a container (200), wherein the filling material is a poorly flowing bulk material, comprising:
a first radar circuit (102', 102) configured to transmit a first radar signal in the direction of a surface (202, 202') of a medium and to receive a first reflected radar signal (210);
a further, second radar circuit (102, 102' configured to transmit a second radar signal in the direction of a further surface (202', 202) of the medium and for receiving a second,
further reflected radar signal (210', 210),
a control device (104) configured to detect one or more echoes (204, 206, 208, 208') in the reflected radar signal (210, 210') and to detect one or more echoes (204, 206, 208, 208') in the second, further reflected radar signal (210', 210);
wherein the control device (104) is configured to detect the presence or absence of a layer (300) in or above the filling material or a cavity below the filling material, based on the detected echo or echoes;
wherein the first radar circuit (102) is positioned in the upper region of the container (200);
wherein the second radar circuit (102') is positioned in the lower region of the container (200), in particular in the region of the outlet of the container (200).

2. Radar measuring device (100) according to claim 1,
wherein the first radar circuit (102) is configured to transmit the first radar signal in the direction of the surface (202, 202') of the layer (300), in particular the top surface of the layer, and to receive a reflected first radar signal (210) from the surface of the layer (300);
wherein the second radar circuit (102') is configured to transmit the second radar signal in the direction of the further surface (202', 202) of the layer (300), in particular the underside of the layer, and to receive a reflected second radar signal (210') from the further surface (202', 202) of the layer (300).

3. Radar measuring device (100) according to claim 1 or 2,
wherein the control device (104) is further configured to determine a first layer echo (208) originating from the upper side of the layer (300) and a second layer echo (208') originating from the lower side of the layer (300).

4. Radar measuring device (100) according to one of the preceding claims,
wherein the control device (104) is further configured to detect a first layer echo (208) originating from the upper side of the layer (300) in the reflected signal of the first radar circuit (102); and to detect a second layer echo (208') originating from the lower side of the layer (300) in the reflected signal of the second radar circuit (102').

5. Radar measuring device (100) according to one of the preceding claims,
wherein the control device (104) is configured to determine a free volume (302), in particular a cavity, below the layer (300) in the container (200).

6. Radar measuring device (100) according to one of the preceding claims,
wherein the control device (104) is configured to send a warning message when a layer (300) or a cavity is detected for the first time.

7. Radar measuring device (100) according to one of the preceding claims, wherein the layer is an ice layer, and wherein the control device (104) is configured issue a warning message when a limit ice layer thickness (d) of the ice layer (300) is exceeded or undershot.

8. Radar measuring device (100) according to claim 7,
further comprising a temperature sensor (106) configured to measure a temperature in the container (200) or an outside temperature; and
wherein the detection of the presence or absence of the ice layer (300) by means of the control device (104) is further based on the measured temperature.

9. Radar measuring device (100) according to one of the preceding claims, wherein the control device (104) is configured to correct the measured level or the measured volume of the medium, taking into account the cavity below the medium.

10. Radar measuring device (100) according to any of the preceding claims,
wherein the control device (104) is configured to activate a device (400) when the cavity has exceeded a minimum size;
whereby the device is configured to vibrate the medium and/or to ventilate the cavity.

11. Use of a radar measuring device (100) according to any one of claims 1 to 10 for detecting the presence or absence of a layer (300) in or above the filling material or a cavity below the filling material.

12. Method for detecting a cavity below the filling material (300) stored in a container (200), wherein the filling material is a poorly flowing bulk material, comprising the steps of:
Transmitting (601) a radar signal toward a surface of a medium (202) by a first radar circuit (102);
Receiving (602) a reflected radar signal;
Detecting (603) one or more echoes (204, 206, 208, 208') in the reflected radar signal (210);
Transmitting a second radar signal in the direction of a further surface (202', 202) of the medium by a further, second radar circuit (102, 102');
Receiving a second, further reflected radar signal (210', 210);
Detecting one or more echoes (204, 206, 208, 208') in the second, further reflected radar signal (210', 210); and
Detecting (604) the presence or absence of a layer (300) in or above the product or a cavity below the product based on the detected echo or echoes;
wherein the first radar circuit (102) is positioned in the upper region of the container (200);
wherein the second radar circuit (102, 102') is positioned in the lower region of the container (200), in particular in the region of the outlet of the container (200).

13. Program element which, when executed on a control device (104) of a radar measuring device (100), instructs the radar measuring device (100) to perform the steps according to claim 12.

14. Computer-readable medium on which a program element according to claim 13 is stored.

## Revendications

1. Appareil de mesure radar (100), conçu pour détecter une cavité sous le produit de remplissage qui est stocké dans un récipient (200), le produit de remplissage étant un produit en vrac s'écoulant difficilement, présentant :
un premier circuit radar (102', 102), conçu pour envoyer un premier signal radar en direction d'une surface (202, 202') d'un milieu et pour recevoir un premier signal radar réfléchi (210) ;
un autre, deuxième circuit radar (102, 102'), conçu pour envoyer un deuxième signal radar en direction d'une autre surface (202', 202) du milieu et pour recevoir un deuxième, autre signal radar réfléchi (210', 210),
un moyen de commande (104), conçu pour déterminer un ou plusieurs échos (204, 206, 208, 208') dans le signal radar réfléchi (210, 210') et pour déterminer un ou plusieurs échos (204, 206, 208, 208') dans le deuxième, autre signal radar réfléchi (210', 210) ;
dans lequel le moyen de commande (104) est conçu pour détecter la présence ou l'absence d'une couche (300) dans ou au-dessus du produit de remplissage ou d'une cavité en dessous du produit de remplissage, sur la base du ou des échos déterminés ;
dans lequel le premier circuit radar (102) est positionné dans la zone supérieure du récipient (200) ;
dans lequel le deuxième circuit radar (102') est positionné dans la zone inférieure du récipient (200), en particulier dans la zone de la sortie du récipient (200).

2. Appareil de mesure radar (100) selon la revendication 1, dans lequel le premier circuit radar (102) est conçu pour envoyer le premier signal radar en direction de la surface (202, 202') de la couche (300), en particulier de la face supérieure de la couche, et pour recevoir un premier signal radar réfléchi (210) de la surface de la couche (300) ;
dans lequel le deuxième circuit radar (102') est conçu pour envoyer le deuxième signal radar en direction de l'autre surface (202', 202) de la couche (300), en particulier de la face inférieure de la couche, et pour recevoir un deuxième signal radar réfléchi (210') de l'autre surface (202', 202) de la couche (300).

3. Appareil de mesure radar (100) selon la revendication 1 ou 2,
dans lequel le moyen de commande (104) est en outre conçu pour déterminer un premier écho de couche (208) provenant de la face supérieure de la couche (300) et un deuxième écho de couche (208') provenant de la face inférieure de la couche (300).

4. Appareil de mesure radar (100) selon l'une des revendications précédentes,
dans lequel le moyen de commande (104) est en outre conçu pour déterminer un premier écho de couche (208) provenant de la face supérieure de la couche (300) dans le signal réfléchi du premier circuit radar (102) ; et pour déterminer un deuxième écho de couche (208') provenant de la face inférieure de la couche (300) dans le signal réfléchi du deuxième circuit radar (102').

5. Appareil de mesure radar (100) selon l'une des revendications précédentes,
dans lequel le moyen de commande (104) est conçu pour déterminer un volume libre (302), en particulier une cavité, sous la couche (300) dans le récipient (200).

6. Appareil de mesure radar (100) selon l'une des revendications précédentes,
dans lequel le moyen de commande (104) est conçu pour émettre un message d'avertissement lorsqu'une couche (300) ou une cavité est détectée pour la première fois.

7. Appareil de mesure radar (100) selon l'une des revendications précédentes,
dans lequel la couche est une couche de glace, et dans lequel le moyen de commande (104) est conçu pour émettre un message d'avertissement lorsqu'une épaisseur de couche de glace limite (d) de la couche de glace (300) est dépassée vers le haut ou vers le bas.

8. Appareil de mesure radar (100) selon la revendication 7, présentant en outre un capteur de température (106) qui est conçu pour mesurer une température dans le récipient (200) ou une température extérieure ; et
dans lequel la détection de la présence ou de l'absence de la couche de glace (300) au moyen du moyen de commande (104) est en outre basée sur la température mesurée.

9. Appareil de mesure radar (100) selon l'une des revendications précédentes,
dans lequel le moyen de commande (104) est conçu pour corriger le niveau de remplissage mesuré ou le volume mesuré du milieu en tenant compte de la cavité située sous le milieu.

10. Appareil de mesure radar (100) selon l'une des revendications précédentes,
dans lequel le moyen de commande (104) est conçu pour activer un dispositif (400) lorsque la cavité a dépassé une taille minimale ;
dans lequel le dispositif est conçu pour agiter le milieu et/ou pour aérer la cavité.

11. Utilisation d'un appareil de mesure radar (100) selon l'une des revendications 1 à 10 pour détecter la présence ou l'absence d'une couche (300) dans ou au-dessus du produit de remplissage ou d'une cavité en dessous du produit de remplissage.

12. Procédé pour détecter une cavité sous le produit de remplissage (300) qui est stocké dans un récipient (200), le produit de remplissage étant un produit en vrac s'écoulant difficilement, comportant les étapes de :
envoyer (601) un signal radar en direction d'une surface d'un milieu (202) par un premier circuit radar (102) ;
recevoir (602) un signal radar réfléchi ;
déterminer (603) un ou plusieurs échos (204, 206, 208, 208') dans le signal radar réfléchi (210) ;
envoyer un deuxième signal radar en direction d'une autre surface (202', 202) du milieu par un autre, deuxième circuit radar (102, 102') ;
recevoir un deuxième, autre signal radar réfléchi (210', 210) ;
déterminer un ou plusieurs échos (204, 206, 208, 208') dans le deuxième, autre signal radar réfléchi (210', 210) ; et
détecter (604) la présence ou l'absence d'une couche (300) dans ou au-dessus du produit ou d'une cavité en dessous du produit, sur la base du ou des échos déterminés ;
dans lequel le premier circuit radar (102) est positionné dans la zone supérieure du récipient (200) ;
dans lequel le deuxième circuit radar (102, 102') est positionné dans la zone inférieure du récipient (200), en particulier dans la zone de la sortie du récipient (200).

13. Élément de programme qui, lorsqu'il est exécuté sur un moyen de commande (104) d'un appareil de mesure radar (100), amène l'appareil de mesure radar (100) à exécuter les étapes selon la revendication 12.

14. Support lisible par ordinateur sur lequel est stocké un élément de programme selon la revendication 13.
